# EUROPÄISCHE PATENTSCHRIFT

(11) **EP 0 545 945 B1**
(45) Veröffentlichungstag und Bekanntmachung des Hinweises auf die Patenterteilung: **21.10.1998**
(21) Anmeldenummer: 91912561.7
(22) Anmeldetag: 02.07.1991
(51) Int. Cl.: G11B 27/10, G11B 7/085, G11B 7/00

(54) **VERFAHREN ZUR VERKÜRZUNG DER ZUGRIFFSZEIT**
PROCESS FOR SHORTENING THE ACCESS TIME
PROCEDE DE RACCOURCISSEMENT DU TEMPS D'ACCES

(43) Veröffentlichungstag der Anmeldung: 16.06.1993
(73) Patentinhaber: Deutsche Thomson-Brandt GmbH, 78003 Villingen-Schwenningen (DE)
(72) Erfinder: BAAS, Dieter, D-7640 Kehl-Auenheim (DE)
(86) Internationale Anmeldenummer: EP9101236
(87) Internationale Veröffentlichungsnummer: WO9301596

(56) Entgegenhaltungen:
- EP-A- 249 781
- EP-A- 0 496 565
- GB-A- 2 107 106
- PATENT ABSTRACTS OF JAPAN, Band 11, Nr. 87 (P-557)[2534] 17. März 1987, & JP,A,61 240 493 (MATSUSHITA ELECTRIC IND. CO. LTD) 25. Oktober 1986
- PATENT ABSTRACTS OF JAPAN, Band 11, Nr. 107 (P-563)[2554] 4. April 1987, & JP,A,61 255 536 (MATSUSHITA ELECTRIC IND. CO. LTD) 13. November 1986
- PATENT ABSTRACTS OF JAPAN, Band 14, Nr. 301 (P-1069)[4244] 28. Juni 1990, & JP,A,2 094 066 (SONY CORP.) 4. April 1990

## Beschreibung

Die Erfindung betrifft ein Verfahren zur Verkürzung der Zugriffszeit bei einem Aufzeichnungsträger.

In einem CD-Spieler tastet eine optische Abtastvorrichtung mittels eines Lichtstrahls die Daten eines rotierenden platzenförmigen Aufzeichnungsträgers, der sogenannten Compact-Disc, ab. Mittels eines Spurregelkreises wird der die Daten abtastende Lichzstrahl entlang den spiralförmigen Datenspuren der Platze geführt.

Damit der CD-Hörer ein von ihm gewünschtes Musikstück hören kann, wird die optische Abtastvorrichtung von der gegenwärtigen Position möglichst schnell zu der Spur geführt, auf der das gewünschte Musikstück beginnt. Der Lichtstrahl kreuzt während dieses Vorgangs, der als Spurspringen bezeichnet wird, eine Vielzahl von Datenspuren; er springt von der gerade abgetasteten Spur zur Zielspur. Je schneller das Spurspringen erfolgt, desto kürzer wird die Zugriffszeit, die Zeit, die Bediener warten muß, bis er das gewünschte Musikstück hören kann.

Von weit größerer Bedeutung als bei einem CD-Spieler sind kurze Zugriffszeiten in einem Datensystem. Bei einem Aufzeichnungs- und/oder Wiedergabegerät, das mit einem CD-ROM als Datenspeicher ausgerüstet ist, sind kurze Zugriffszeiten ein wesentliches Qualitätsmerkmal. Je nach Gerät und Platte kann die Zugriffszeit zwischen etwa 100 ms und einigen Sekunden schwanken.

Aus der JP-A-0294066 ist ein Bandgerät bekannt, welches zum Auslesen digitaler Daten von einem Band und zum Umwandeln derselben in ein analoges Signal geeignet ist. Um zu verhindern, daß der Anfang eines Datensatzes beim Beginn des Abspielens verstümmelt wird, wird der Beginn des entsprechenden Programms zunächst in einen Speicher eingelesen. Wird nun die Wiedergabe gestartet, so wird zunächst der Speicher ausgelesen, bevor die vom Band gelesenen Daten direkt ausgegeben werden. Auf diese Weise werden Verstümmelungen der Daten, die beim Anlaufen des Wiedergabemodus auftreten können, vermieden.

Aus der JP-A-61240493 und der JP-A-61255536 sind CD-Spieler bekannt, bei denen die von einer optischen Abtastvorrichtung gelesenen Daten an einen Demodulator übertragen werden. Der Demodulator leitet das demodulierte Datensignal an einen Speicher, der es dem Eingang eines Digital-Analog-Wandlers zuführt. Hierbei wird lediglich der Beginn einer einzigen Gruppe aufgezeichneter Daten gespeichert solange keine Wiedergabe erfolgt. Nach Beginn der Wiedergabe werden wieterhin alle Daten zunächst dem Speicher zugeführt.

Die nicht vorveröffentlichte EP-A-0 496 565, Stand der Technik gemäß Art. 54(3)(4) EPÜ für die benannten Vertragsstaaten FR und GB, zeigt ein Wiedergabegerät für digitale Daten, bei dem nach Einlegen des Datenträgermediums zunächst das gesamte Datenträgermedium im Schnelldurchlauf nach den Startpositionen einzelner Gruppen aufgezeichneter Daten durchsucht wird und dabei die Anfangsbereiche aller Gruppen zwischengespeichert werden.

Es ist daher Aufgabe der Erfindung, die Zugriffszeit erheblich zu verkürzen.

Insoweit als die Vertragsstaaten ES and IT benannt sind, sind zwei erfindungsgemäße Verfahren in den Ansprüchen 1 und 2 angegeben, und eine erfindungsgemäße Anordnung zur Durchführung des Verfahrens nach Anspruch 1 oder 2 ist in Anspruch 11 angegeben.

Insoweit als die Vertragsstaaten FR und GB benannt sind, sind drei erfindungsgemäße Verfahren in die Ansprüchen 1,2 und 3 angegeben, und eine erfindungsgemäße Anordnung zur Durchführung des Verfahrens nach dem Anspruch 3 ist in Anspruch 12 angegeben.

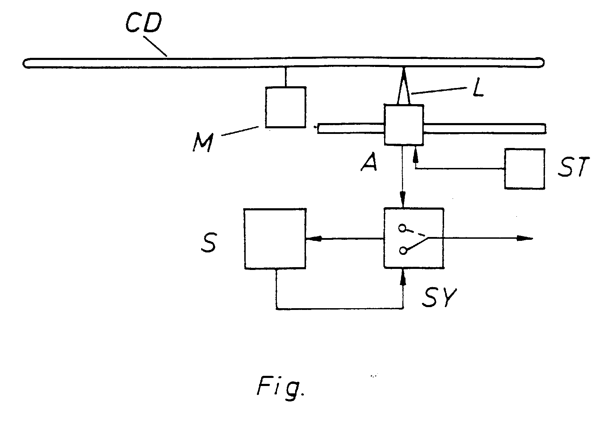

In der Figur ist eine Anordnung zur Durchführung der erfindungsgemäßen Verfahren gezeigt.

Anhand der Figur und eines CD-Spielers wird die Erfindung nun beispielhaft beschrieben und erläutert.

Wenn eine Platte CD in den CD-Spieler eingelegt wird, bewirkt eine Steuerschaltung ST, daß zuerst die optische Abtastvorrichtung A, welche die Platte CD mit einem Lichtstrahl L abtastet, nacheinander den Anfang eines jeden Musikstücks anfährt, um die ersten n Daten eines jeden Musikstücks zu lesen. Diese ersten n Daten eines jeden Musikstücks werden nun in einem Speicher S gespeichert. Wenn die Speicherung der ersten n Daten jeder Gruppe im Speicher S beendet ist, ist der CD-Spieler betriebsbereit. Die Platte kann jetzt abgespielt werden.

Wenn nun der CD-Hörer z.B. ein Musikstück hören möchte, so wird sofort mit dem Auslesen der im Speicher S abgelegten ersten n Daten dieses Musikstücks begonnen, währenddessen die optische Abtastvorrichtung den Beginn des vom Hörer gewünschten Musikstücks auf der Platte CD sucht. Eine Synchronisationsschaltung SY leitet die aus dem Speicher S gelesenen Daten weiter. Währenddessen bewegt die Steuerschaltung ST die optische Abtastvorrichtung A an den Anfang des gewünschten Musikstücks auf der Platte CD, damit mit dem Lesen der Daten von der Platte CD begonnen werden kann. In der Synchronisationsschaltung SY wird der vom Speicher S kommende Datenfluß mit dem Datenfluß der optischen Abtastvorrichtung A synchronisiert. Sobald die beiden Datenströme synchronisiert sind, leitet die Synchronisationsschaltung SY nicht mehr die vom Speicher S kommenden Daten, sondern die von der optischen Abtastvorrichtung A gelieferten Daten weiter.

Weil die ersten n Daten eines jeden Musikstücks in einem Speicher abgelegt sind, hört der Bediener sofort jedes von ihm gewünschte Musikstück. Die Zugriffszeit ist nahezu null geworden. Während die Daten aus diesem Speicher S gelesen werden, hat die optische Abtastvorrichtung genügend Zeit, das gewünschte Musikstück auf der Platte zu suchen. Nachdem die vom Speicher kommenden Daten und die von der Abtastvorrichtung gelieferten Daten synchronisiert sind, wird auf die von der Abtastvorrichtung gelieferten Daten umgeschaltet. Der Hörer bemerkt von dieser Umschaltung nichts.

Es genügt bereits, nur von einem Teil der Gruppen bzw. Musikstücke die ersten n Daten abzuspeichern, um eine Verkürzung der Zugriffszeiten zu erzielen. Die Zugriffszeiten für diejenigen Gruppen, deren erste n Daten im Speicher abgelegt sind werden verkürzt; die Zugriffszeiten für die restlichen Gruppen werden jedoch nicht verkürzt.

Gemäß der zweiten erfindungsgemäßen Lösung werden zunächst nur von einem Teil der Gruppen bzw. Musikstücke die ersten n Daten gespeichert. Während der Pausen zwischen zwei Musikstükken und während der CD-Spieler auf Pausenbetrieb umgestellt ist, werden die ersten n Daten der restlichen Musikstücke gespeichert.

Anstelle der einzelnen Musikstücke kann es sich aber auch um andere Gruppen beliebiger Daten handeln. Auf einem CD-ROM, einer einmal beschreibbaren Compact-Disc, können z.B. die aufgezeichneten Daten in mehrere Gruppen unterteilt sein. Von jeder Gruppe werden nach dem Einlegen der Platte die ersten n Daten in dem Speicher gespeichert. Es ist sinnvoll n mindestens so groß zu wählen, daß die Abtastvorrichtung genügend Zeit hat, den Anfang jeweils derjenigen Gruppe zu finden, deren Daten gelesen werden sollen. Jedoch ist es nicht erforderlich, für jede Gruppe die gleiche Anzahl von Daten in dem Speicher abzulegen.

Bei einem ersten Ausführungsbeispiel der Erfindung ist vorgesehen, bei jeder Gruppe bzw. bei jedem Musikstück die Daten der ersten Umdrehung zu speichern.

Es ist aber auch möglich, wie bei einem zweiten Ausführungsbeispiel vorgesehen ist, die Daten der ersten m Umdrehungen zu speichern, wobei m eine ganze Zahl oder ein unechter Bruch ist.

Bei einem dritten Ausführungsbeispiel hängt die Anzahl der je Gruppe im Speicher abgelegten Daten von der Anzahl der auf der Platte aufgezeichneten Gruppen ab.

Zum Speichern der ersten m Daten sind bei einem vierten Ausführungsbeispiel ein schneller Speicher geringer Kapazität als Zwischenspeicher und ein residenter Speicher vorgesehen. Beim Speichern werden die von der Abtastvorrichtung gelesenen Daten zuerst im schnellen Speicher abgelegt und von dort an den residenten Speicher weitergeleitet. Beim Auslesen der Daten wird in umgekehrter Reihenfolge vorgegangen. Die Daten werden zuerst vom residenten Speicher in den schnellen Speicher übermittelt, von wo sie dann ausgelesen werden. Der Vorteil des vierten Ausführungsbeispieles liegt darin, daß nur ein relativ kleiner schneller Speicherbaustein erforderlich ist.

Bei einem CD-Spieler ist es sinnvoll, die Stellen der Platten mit dem Index 0 nicht zu speichern, weil sie keine Daten enthalten. Stattdessen wird die Länge der durch die Indizes 0 festgelegten Pausen gespeichert. Am Anfang eines Musikstücks stehende Daten, die null sind, werden ebenfalls nicht gespeichert; ähnlich wie bei den Pausen wird aber die Dauer dieser Daten, die keine Informationen enthalten, gespeichert.

Das erfindungsgemäße Verfahren ist für Aufzeichnungs- und/oder Wiedergabegeräte geeignet, die mit einem Aufzeichnungsträger ausgerüstet sind, auf dem die aufgezeichneten Daten in Gruppen aufgeteilt sind. Als Beispiele kommen CD-Spieler, Videoplattenspieler, DRAW-Disc-Spieler und magneto-optische Geräte infrage.

## Patentansprüche (Patentansprüche für folgende(n) Vertragsstaat(en): ES, IT)

1. Verfahren zur Verkürzung der Zugriffszeit bei einem Aufzeichnungsträger (CD), auf dem die aufgezeichneten Daten in Gruppen aufgeteilt sind, **dadurch gekennzeichnet,** daß nach dem Einlegen des Aufzeichnungsträgers (CD) in ein Aufzeichnungs- und/oder Wiedergabegerät zuerst die ersten n Daten jeder Gruppe in einem Speicher (S) gespeichert werden, wobei die Anzahl n von Daten von Gruppe zu Gruppe unterschiedlich sein kann, daß beim Lesen der Daten einer Gruppe zuerst die im Speicher (S) abgelegten Daten ausgelesen werden, währenddessen die Abtastvorrichtung (A) des Aufzeichnungs- und/oder Wiedergabegerätes diese Gruppe sucht, daß nach dem Auffinden dieser Gruppe nicht mehr die im Speicher (S) abgelegten Daten, sondern die von der Abtastvorrichtung (A) gelieferten Daten ausgelesen werden.

2. Verfahren zur Verkürzung der Zugriffszeit bei einem Aufzeichnungsträger (CD), auf dem die aufgezeichneten Daten in Gruppen aufgeteilt sind, **dadurch gekennzeichnet,** daß nach dem Einlegen des Aufzeichnungsträgers in ein Aufzeichnungs- und/oder Wiedergabegerät zuerst die ersten n Daten eines Teils der Gruppen in einem Speicher gespeichert werden, wobei die Anzahl n von Daten von Gruppe zu Gruppe unterschiedlich sein kann, daß beim Lesen der Daten einer Gruppe zuerst die im Speicher abgelegten Daten ausgelesen werden, währenddessen die Abtastvorrichtung des Aufzeichnungs- und/oder Wiedergabegerätes diese Gruppe sucht, daß nach dem Auffinden dieser Gruppe nicht mehr die im Speicher abgelegten Daten, sondern die nun von der Abtastvorrichtung gelieferten Daten ausgelesen werden, und daß in den Pausen zwischen dem Lesen der Daten zweier Gruppen die ersten n Daten der restlichen Gruppen im Speicher gespeichert werden.

3. Verfahren nach Anspruch 1 oder 2, **dadurch gekennzeichnet,** daß, nachdem aer vom Speicher (S) kommende Datenfluß mit dem Datenfluß, der von der Abtastvorrichtung (A) kommt, synchronisiert ist, nicht mehr die vom Speicher (S) ausgelesenen Daten, sondern die von der Abtastvorrichtung (A) gelieferten Daten zur weiteren Verarbeitung weitergeleitet werden.

4. Verfahren nach Anspruch 1, 2 oder 3, **dadurch gekennzeichnet,** daß es sich um eine Platte (CD) als Aufzeichnungsträger handelt.

5. Verfahren nach Anspruch 4, **dadurch gekennzeichnet,** daß bei jeder Gruppe die Daten für mindestens eine Umdrehung der Platte im Speicher (S) gespeichert werden.

6. Verfahren nach Anspruch 1, 2, 3, 4 oder 5, **dadurch gekennzeichnet,** daß die Anzahl n von der Anzahl der auf dem Aufzeichnungsträger (CD) aufgezeichneten Gruppen abhängt.

7. Verfahren nach Anspruch 1, 2, 3, 4, 5 oder 6, **dadurch gekennzeichnet,** daß zum Speichern der ersten n Daten jeder Gruppe ein schneller Speicher als Zwischenspeicher und ein residenter Speicher vorgesehen sind, daß die Daten zuerst im schnellen Speicher abgelegt und anschließend zum residenten Speicher weitergeleitet werden und daß das Auslesen der Daten in der umgekehrten Reihenfolge erfolgt.

8. Verfahren nach einem der vorhergehenden Ansprüche, dadurch gekennzeichnet, daß die Anzahl von Daten, die im Speicher (S) abgelegt wird, nicht für jede Gruppe gleich ist.

9. Verfahren nach einem der vorhergehenden Ansprüche, dadurch gekennzeichnet, daß bei einem CD-Spieler Daten in den Stellen mit dem Index 0 nicht gespeichert werden.

10. Verfahren nach Anspruch 9, **dadurch gekennzeichnet,** daß die Dauer Pausen gespeichert wird.

11. Anordnung zur Durchführung des Verfahrens nach Anspruch 1, 2, 3, 4, 5, 6, 7, 8 oder 9, dadurch gekennzeichet, daß eine Abtastvorrichtung (A), die den Aufzeichnungsträger (CD) abtastet, mit dem ersten Eingang einer Synchronisationsschaltung (SY) verbunden ist, deren Ausgang mit dem Speicher (S) verbunden ist, daß der Ausgang des Speichers (S) mit dem zweiter Eingang der Synchronisationsschaltung (SY) verbunden ist, an deren Ausgang die Daten abnehmbar sind, wobei der Ausgang der Synchronisationsschaltung (SY) mit dem ersten oder dem zweiten Eizgang verbindbar ist und die Synchronisationsschaltung (SY) vom zweiten auf den ersten Eingang schaltet, wenn die an diesen Eingäzgen anliegenden Datenströme synchronisiert sind, und daß eine Steuerschaltung (ST) mit der Abtastvorrichtung (A) verbunden ist.

## Patentansprüche (Patentansprüche für folgende(n) Vertragsstaat(en): FR, GB)

1. Verfahren zur Verkürzung der Zugriffszeit bei einem Aufzeichnungsträger (CD), auf dem die aufgezeichneten Daten in Gruppen aufgeteilt sind, wobei nach dem Einlegen des Aufzeichnungsträgers in ein Aufzeichnungs- und/oder Wiedergabegerät zuerst die ersten n Daten eines Teils der Gruppen in einem Speicher gespeichert werden, wobei die Anzahl n von Daten von Gruppe zu Gruppe unterschiedlich sein kann, und wobei beim Lesen der Daten einer Gruppe zuerst die im Speicher abgelegten Daten ausgelesen werden, währenddessen die Abtastvorrichtung des Aufzeichnungs- und/oder Wiedergabegerätes diese Gruppe sucht, wobei nach dem Auffinden dieser Gruppe nicht mehr die im Speicher abgelegten Daten, sondern die nun von der Abtastvorrichtung gelieferten Daten ausgelesen werden, und wobei in den Pausen zwischen dem Lesen der Daten zweier Gruppen die ersten n Daten der restlichen Gruppen im Speicher gespeichert werden.

2. Verfahren zur Verkürzung der Zugriffszeit bei einem Aufzeichnungsträger (CD), auf dem die aufgezeichneten Daten in Gruppen aufgeteilt sind, wobei nach dem Einlegen des Aufzeichnungsträgers (CD) in ein Aufzeichnungs- und/oder Wiedergabegerät zuerst die ersten n Daten jeder Gruppe in einem Speicher (S) gespeichert werden, wobei die Anzahl n von Daten von Gruppe zu Gruppe unterschiedlich sein kann, und wobei eim Lesen der Daten einer Gruppe zuerst die im Speicher (S) abgelegten Daten ausgelesen werden, währenddessen die Abtastvorrichtung (A) des Aufzeichnungs- und/oder Wiedergabegerätes diese Gruppe sucht, wobei nach dem Auffinden dieser Gruppe nicht mehr die im Speicher (S) abgelegten Daten, sondern die von der Abtastvorrichtung (A) gelieferten Daten ausgelesen werden, und die Anzahl n von der Anzahl der auf dem Aufzeichnungsträger (CD) aufgezeichneten Gruppen abhängt.

3. Verfahren zur Verkürzung der Zugriffszeit bei einem Aufzeichnungsträger (CD), auf dem die aufgezeichneten Daten in Gruppen aufgeteilt sind, wobei nach dem Einlegen des Aufzeichnungsträgers (CD) in ein Aufzeichnungs- und/oder Wiedergabegerät zuerst die ersten n Daten jeder Gruppe in einem Speicher (S) gespeichert werden, wobei die Anzahl n von Daten von Gruppe zu Gruppe unterschiedlich sein kann, und wobei beim Lesen der Daten einer Gruppe zuerst die im Speicher (S) abgelegten Daten ausgelesen werden, währenddessen die Abtastvorrichtung (A) des Aufzeichnungs- und/oder Wiedergabegerätes diese Gruppe sucht, und wobei nach dem Auffinden dieser Gruppe nicht mehr die im Speicher (S) abgelegten Daten, sondern die von der Abtastvorrichtung (A) gelieferten Daten ausgelesen werden, wobei zum Speichern der ersten n Daten jeder Gruppe ein schneller Speicher als Zwischenspeicher und ein residenter Speicher vorgesehen sind, und die Daten zuerst im schnellen Speicher abgelegt und anschließend zum residenten Speicher weitergeleitet werden und das Auslesen der Daten in der umgekehrten Reihenfolge erfolgt.

4. Verfahren nach einem der Ansprüche 1 oder 2, dadurch gekennzeichnet, daß zum Speichern der ersten n Daten jeder Gruppe ein schneller Speicher als Zwischenspeicher und ein residenter Speicher vorgesehen sind, daß die Daten zuerst im schnellen Speicher abgelegt und anschließend zum residenten Speicher weitergeleitet werden und daß das Auslesen der Daten in der umgekehrten Reihenfolge erfolgt.

5. Verfahren nach einem der Ansprüche 1 oder 3, dadurch gekennzeichnet, daß die Anzahl n von der Anzahl der auf dem Aufzeichnungsträger (CD) aufgezeichneten Gruppen abhängt.

6. Verfahren nach einem der vorhergehenden Ansprüche, dadurch gekennzeichnet, daß, nachdem der vom Speicher (S) kommende Datenfluß mit dem Datenfluß, der von der Abtastvorrichtung (A) kommt, synchronisiert ist, nicht mehr die vom Speicher (S) ausgelesenen Daten, sondern die von der Abtastvorrichtung (A) gelieferten Daten zur weiteren Verarbeitung weitergeleitet werden.

7. Verfahren nach einem der vorhergehenden Arnspruche, dadurch gekennzeichnet, daß es sich um eine Platte (CD) als Aufzeichnungsträger handelt.

8. Verfahren nach Anspruch 7, dadurch gekennzeichnet, daß bei jeder Gruppe die Daten für mindestens eine Umdrehung der Platte im Speicher (S) gespeichert werden.

9. Verfahren nach einem der vorhergahenden Ansprüche, dadurch gekennzeichnet, daß die Anzahl von Daten, die im Speicher (S) abgelegt wird, nicht für jede Gruppe gleich ist.

10. Verfahren nach einem der vorhergehenden Ansprüche, dadurch gekennzeichnet, daß bei einem CD-Spieler Daten in den Stellen mit dem Index 0 nicht gespeichert werden.

11. Verfahren nach Anspruch 10, dadurch gekennzeichnet, daß die Dauer der Pausen gespeichert wird.

12. Anordnung zur Durchführung des Verfahrens nach Anspruch 3 oder 4, wobei eine Abtastvorrichtung (A), die den Aufzeichnungsträger (CD) abtastet, mit dem ersten Eingang einer Synchronisationsschaltung (SY) verbunden ist, deren Ausgang mit dem Speicher (S) verbunden ist, wobei der Ausgang des Speichers (S) mit dem zweiten Eingang der Synchronisationsschaltung (SY) verbunden ist, am deren Ausgang die Daten abnehmbar sind, wobei der Ausgang der Synchronisationsschaltung (SY) mit dem ersten oder dem zweiten Eingang verbindbar ist und die Synchronisationsschaltung (SY) vom zweiten auf den ersten Eingang schaltet, wenn die an diesen Eingängen anliegenden Datenströme synchronisiert sind, und wobei eine Steuerschaltung (ST) mit der Abtastvorrichtung (A) verbunden ist und wobei der Speicher (S) einen residenten Speicher und einen im Vergleich zum residenten Speicher Schnelleren Zwischenspeicher aufweist.

## Claims (Claims for the following Contracting State(s): ES, IT)

1. Method of shortening the access time when using a recording medium (CD) on which the recorded items of data are divided into groups, characterised in that, the first n items of data of each group are initially stored in a store (S) after the recording medium (CD) has been inserted into a recording and/or reproduction equipment whereby the number n of items of data may be different from group to group, that upon reading the items of data of a group, the items of data that have been placed in the store (S) are read-out first, during which time, the scanning device (A) of the recording and/or reproduction equipment searches for this group, that after this group has been found, the items of data that have been placed in the store (S) are no longer read-out but instead, the items of data delivered by the scanning device (A) are read-out.

2. Method of shortening the access time when using a recording medium (CD) on which the recorded items of data are divided into groups, characterised in that, the first n items of data from a portion of the groups are initially stored in a store after the recording medium has been inserted into a recording and/or reproduction equipment whereby the number n of items of data may be different from group to group, that upon reading the items of data of a group, the items of data that have been placed in the store are read-out first, during which time, the scanning device of the recording and/or reproduction equipment searches for this group, that after this group has been found, the items of data that have been placed in the store are no longer read-out but instead, the items of data now being delivered by the scanning device are read-out, and that the first n items of data of the remaining groups are stored in the store in the pauses between the reading of the items of data of the two groups.

3. Method in accordance with Claim 1 or 2, characterised in that, after the flow of data coming from the store (S) is synchronised with the flow of data coming from the scanning device (A), the items of data read-out from the store (S) are no longer passed on for further processing but, the items of data delivered by the scanning device (A) are passed on instead.

4. Method in accordance with Claim 1, 2 or 3, characterised in that, the recording medium is a disc (CD).

5. Method in accordance with Claim 4, characterised in that, for each group, the items of data are stored in the store (S) for at least one revolution of the disc.

6. Method in accordance with Claim 1, 2, 3, 4 or 5, characterised in that, the number n depends on the number of groups which are recorded on the recording medium (CD).

7. Method in accordance with Claim 1, 2, 3, 4, 5 or 6, characterised in that, there are provided a fast store acting as an intermediate store and a resident store for storing the first n items of data of each group, that the items of data are initially placed in the fast store and thereafter are passed on to the resident store, and that the read-out of the items of data occurs in the inverse sequence.

8. Method in accordance with any of the preceding Claims, characterised in that, the number of items of data that is stored in the store (S) is not the same for each group.

9. Method in accordance with any of the preceding Claims, characterised in that, in the case of a CD player, the items of data at those positions having the index 0 are not stored.

10. Method in accordance with Claim 9, characterised in that, the duration of the pauses is stored.

11. Arrangement for carrying out the method in accordance with Claim 1, 2, 3, 4, 5, 6, 7, 8 or 9, characterised in that, a scanning device (A), which scans the recording medium (CD), is connected to the first input of a synchronising circuit (SY) whose output is connected to the store (S), that the output of the store (S) is connected to the second input of the synchronising circuit (SY) from whose output the items of data are derivable whereby the output of the synchronising circuit (SY) is connectible to the first or the second input and the synchronising circuit (SY) switches from the second to the first input when the data streams present on these inputs are synchronised, and that a control circuit (ST) is connected to the scanning device (A).

## Claims (Claims for the following Contracting State(s): FR, GB)

1. Method of shortening the access time when using a recording medium (CD) on which the recorded items of data are divided into groups wherein, the first n items of data from a portion of the groups are initially stored in a store after the recording medium has been inserted into a recording and/or reproduction equipment whereby the number n of items of data may be different from group to group, and wherein, upon reading the items of data of a group, the items of data that have been placed in the store are read-out first, during which time the scanning device of the recording and/or reproduction equipment searches for this group whereby, after this group has been found, the items of data that have been placed in the store are no longer read-out but instead, the items of data now being delivered by the scanning device are read-out and wherein the first n items of data of the remaining groups are stored in the store in the pauses between the reading of the items of data of the two groups.

2. Method of shortening the access time when using a recording medium (CD) on which the recorded items of data are divided into groups, wherein the first n items of data of each group are initially stored in a store (S) after the recording medium (CD) has been inserted into a recording and/or reproduction equipment whereby the number n of items of data may be different from group to group, and wherein, upon reading the items of data of a group, the items of data that have been placed in the store (S) are read-out first, during which time the scanning device (A) of the recording and/or reproduction equipment searches for this group whereby after this group has been found, the items of data that have been placed in the store (S) are no longer read-out but instead, the items of data delivered by the scanning device (A) are read-out, and the number n depends upon the number of groups that have been recorded on the recording medium (CD).

3. Method of shortening the access time when using a recording medium (CD) on which the recorded items of data are divided into groups, wherein the first n items of data of each group are initially stored in a store (S) after the recording medium (CD) has been inserted into a recording and/or reproduction equipment whereby the number n of items of data may be different from group to group, and wherein, upon reading the items of data of a group, the items of data that have been placed in the store (S) are read-out first during which time the scanning device (A) of the recording and/or reproduction equipment searches for this group, and wherein after this group has been found, the items of data that have been placed in the store (S) are no longer read-out but instead, the items of data delivered by the scanning device (A) are read-out, whereby, for storing the first n items of data of each group, there are provided a fast store acting as an intermediate store and a resident store and the items of data are initially placed in the fast store and thereafter are passed on to the resident store and the read-out of the items of data occurs in the inverse sequence.

4. Method in accordance with either of Claims 1 or 2, characterised in that, for storing the first n items of data of each group, there are provided a fast store acting as an intermediate store and a resident store, that the items of data are initially placed in the fast store and thereafter are passed on to the resident store and that the read-out of the items of data occurs in the inverse sequence.

5. Method in accordance with either of Claims 1 or 3, characterised in that, the number n depends upon the number of groups that have been recorded on the recording medium (CD).

6. Method in accordance with any of the preceding Claims, characterised in that, after the flow of data coming from the store (S) is synchronised with the flow of data coming from the scanning device (A), the items of data read-out from the store (S) are no longer passed on for further processing but, the items of data delivered by the scanning device (A) are passed on instead.

7. Method in accordance with any of the preceding Claims, characterised in that, the recording medium is a disc (CD).

8. Method in accordance with Claim 7, characterised in that, for each group, the items of data are stored in the store (S) for at least one revolution of the disc.

9. Method in accordance with any of the preceding Claims, characterised in that, the number of items of data that is stored in the store (S) is not the same for each group.

10. Method in accordance with any of the preceding Claims, characterised in that, in the case of a CD player, the items of data at those positions having the index 0 are not stored.

11. Method in accordance with Claim 10, characterised in that, the duration of the pauses is stored.

12. Arrangement for carrying out the method in accordance with Claim 3 or 4, wherein a scanning device (A), which scans the recording medium (CD), is connected to the first input of a synchronising circuit (SY) whose output is connected to the store (S), wherein the output of the store (S) is connected to the second input of the synchronising circuit (SY) from whose output the items of data are derivable whereby the output of the synchronising circuit (SY) is connectible to the first or the second input, and the synchronising circuit (SY) switches from the second to the first input when the data streams present on these inputs are synchronised, and wherein a control circuit (ST) is connected to the scanning device (A) and wherein the store (S) comprises a resident store and a buffer store which is faster in comparison with the resident store.

## Revendications (Revendications pour l'(les) Etat(s) contractant(s) suivant(s): ES, IT)

1. Procédé de raccourcissement du temps d'accès dans un support d'enregistrement (CD) sur lequel les données enregistrées sont réparties en groupes, **caractérisé en ce que**
après la mise en place du support d'enregistrement (CD) dans un appareil d'enregistrement et/ou de lecture, les n premières données de chaque groupe sont d'abord mises dans une mémoire (S), le nombre n de données pouvant varié d'un groupe à l'autre,
lors de la lecture des données d'un groupe, ce sont d'abord les données placées dans la mémoire (S) qui sont extraites, tandis que le dispositif de balayage (A) de l'appareil d'enregistrement et/ou de lecture cherche ce groupe,
une fois le groupe trouvé, ce ne sont plus les données de la mémoire (S) mais les données fournies par le dispositif de balayage (A) qui sont lues.

2. Procédé de raccourcissement du temps d'accès dans un support d'enregistrement (CD) sur lequel les données enregistrées sont réparties en groupes, **caractérisé en ce que**
après la mise en place du support d'enregistrement dans un appareil d'enregistrement et/ou de lecture, les n premières données d'une partie des groupes sont d'abord mises dans une mémoire, le nombre n de données pouvant varié d'un groupe à l'autre,
lors de la lecture des données d'un groupe ce sont d'abord les données placées dans la mémoire qui sont extraites, tandis que le dispositif de balayage de l'appareil d'enregistrement et/ou de lecture cherche ce groupe,
une fois le groupe trouvé, ce ne sont plus les données de la mémoire mais les données fournies alors par le dispositif de balayage qui sont lues,
pendant les pauses entre la lecture des données de deux groupes, les n premières données des groupes restants sont placées dans la mémoire.

3. Procédé selon la revendication 1 ou 2, **caractérisé en ce que** une fois que le flux de données provenant de la mémoire (S) est synchronisé avec le flux de données provenant du dispositif de balayage (A), ce ne sont plus les données extraites de la mémoire (S) mais les données fournies par le dispositif de balayage (A) qui sont transmises pour traitement.

4. Procédé selon la revendication 1, 2 ou 3, **caractérisé en ce que** le support d'enregistrement concerné est un disque (CD).

5. Procédé selon la revendication 4, **caractérisé en ce que** pour chaque groupe, les données pour au moins un tour du disque sont enregistrées dans la mémoire (S).

6. Procédé selon la revendication 1, 2, 3, 4 ou 5, **caractérisé en ce que** le nombre n dépend du nombre de groupes enregistrés sur le support d'enregistrement (CD).

7. Procédé selon la revendication 1, 2, 3, 4, 5 ou 6, **caractérisé en ce que**
pour la mémorisation des n premières données de chaque groupe, on prévoit une mémoire rapide comme mémoire temporaire et une mémoire résidente.
les données sont d'abord placées dans la mémoire rapide puis transmises à la mémoire résidente et
l'extraction pour lecture des données a lieu inversement.

8. Procédé selon une des revendications précédentes, **caractérisé en ce que** le nombre de données placées dans la mémoire (S) n'est pas le même pour chaque groupe.

9. Procédé selon une des revendications précédentes, **caractérisé en ce que** pour un lecteur de CD, les données des positions d'indice 0 ne sont pas mémorisées.

10. Procédé selon la revendication 9, **caractérisé en ce que** la durée des pauses est enregistrée.

11. Configuration pour l'application du procédé selon la revendication 1, 2, 3, 4, 5, 6, 7, 8, ou 9, **caractérisé en ce que**
un dispositif de balayage (A) qui analyse le support d'enregistrement (CD), est relié avec la première entrée d'un circuit de synchronisation (SY) dont la sortie est reliée avec la mémoire (S) ;
la sortie de la mémoire (S) est reliée avec la deuxième entrée du circuit de synchronisation (SY) à la sortie duquel les données sont disponibles ;
la sortie du circuit de synchronisation (SY) peut se relier avec la première ou la deuxième entrée et le circuit de synchronisation (SY) se commute de la deuxième sur la première entrée, lorsque les flux de données à ces entrées sont synchronisés ;
un circuit de commande (ST) est relié avec le dispositif de balayage (A).

## Revendications (Revendications pour l'(les) Etat(s) contractant(s) suivant(s): FR, GB)

1. Procédé de raccourcissement du temps d'accès dans un support d'enregistrement (CD) sur lequel les données enregistrées sont réparties en groupes, où
après la mise en place du support d'enregistrement dans un appareil d'enregistrement et/ou de lecture, les n premières données d'une partie des groupes sont d'abord mises dans une mémoire, le nombre n de données pouvant varié d'un groupe à l'autre,
lors de la lecture des données d'un groupe, ce sont d'abord les données placées dans la mémoire qui sont extraites, tandis que le dispositif de balayage de l'appareil d'enregistrement et/ou de lecture cherche ce groupe,
une fois le groupe trouvé, ce ne sont plus les données de la mémoire mais les données alors fournies par le dispositif de balayage qui sont lues ;
pendant les pauses entre la lecture des données de deux groupes, les n premières données des groupes restants sont placées dans la mémoire.

2. Procédé de raccourcissement du temps d'accès dans un support d'enregistrement (CD) sur lequel les données enregistrées sont réparties en groupes, où
après la mise en place du support d'enregistrement (CD) dans un appareil d'enregistrement et/ou de lecture, les n premières données de chaque groupe sont d'abord mises dans une mémoire (S), le nombre n de données pouvant varié d'un groupe à l'autre,
lors de la lecture des données d'un groupe ce sont d'abord les données placées dans la mémoire (S) qui sont extraites, tandis que le dispositif de balayage (A) de l'appareil d'enregistrement et/ou de lecture cherche ce groupe,
une fois le groupe trouvé, ce ne sont plus les données de la mémoire (S) mais les données fournies alors par le dispositif de balayage (A) qui sont lues,
le nombre n dépend du nombre de groupes enregistrés sur le support d'enregistrement (CD).

3. Procédé de raccourcissement du temps d'accès dans un support d'enregistrement (CD) sur lequel les données enregistrées sont réparties en groupes, où
après la mise en place du support d'enregistrement (CD) dans un appareil d'enregistrement et/ou de lecture, les n premières données de chaque groupe sont d'abord mises dans une mémoire (S), le nombre n de données pouvant varié d'un groupe à l'autre,
lors de la lecture des données d'un groupe ce sont d'abord les données placées dans la mémoire (S) qui sont extraites, tandis que le dispositif de balayage (A) de l'appareil d'enregistrement et/ou de lecture cherche ce groupe,
une fois le groupe trouvé, ce ne sont plus les données de la mémoire (S) mais les données fournies par le dispositif de balayage (A) qui sont lues,
pour la mémorisation des n premières données de chaque groupe. on prévoit une mémoire rapide comme mémoire temporaire et une mémoire résidente,
les données sont d'abord placées dans la mémoire rapide puis transmises à la mémoire résidente et
l'extraction pour lecture des données a lieu inversement.

4. Procédé selon la revendication 1 ou 2, **caractérisé en ce que**
pour la mémorisation des n premières données de chaque groupe, on prévoit une mémoire rapide comme mémoire temporaire et une mémoire résidente,
les données sont d'abord placées dans la mémoire rapide puis transmises à la mémoire résidente et
l'extraction pour lecture des données a lieu inversement.

5. Procédé selon la revendication 1 ou 3, **caractérisé en ce que** le nombre n dépend du nombre de groupes enregistrés sur le support d'enregistrement (CD).

6. Procédé selon une des revendications précédentes, **caractérisé en ce que** une fois que le flux de données provenant de la mémoire (S) est synchronisé avec le flux de données provenant du dispositif de balayage (A), ce ne sont plus les données extraites de la mémoire (S) mais les données fournies par le dispositif de balayage (A) qui sont transmises pour traitement

7. Procédé selon une des revendications précédentes, **caractérisé en ce que** le support d'enregistrement concerné est un disque (CD).

8. Procédé selon la revendication 7, **caractérisé en ce que** pour chaque groupe, les données pour au moins un tour du disque sont enregistrées dans la mémoire (S).

9. Procédé selon une des revendications précédentes, **caractérisé en ce que** le nombre de données placées dans la mémoire (S) n'est pas le même pour chaque groupe.

10. Procédé selon une des revendications précédentes, **caractérisé en ce que** pour un lecteur de CD, les données des positions d'indice 0 ne sont pas mémorisées.

11. Procédé selon la revendication 10, **caractérisé en ce que** la durée des pauses est enregistrée.

12. Configuration pour l'application du procédé selon la revendication 3 ou 4 où
un dispositif de balayage (A) qui analyse le support d'enregistrement (CD), est relié avec la première entrée d'un circuit de synchronisation (SY) dont la sortie est reliée avec la mémoire (S) ;
la sortie de la mémoire (S) est reliée avec la deuxième entrée du circuit de synchronisation (SY) à la sortie duquel les données sont disponibles ;
la sortie du circuit de synchronisation (SY) peut se relier avec la première ou la deuxième entrée et le circuit de synchronisation (SY) se commute de la deuxième sur la première entrée, lorsque les flux de données à ces entrées sont synchronisés ;
un circuit de commande (ST) est relié avec le dispositif de balayage (A) ;
la mémoire (S) présente une mémoire résidente et une mémoire temporaire plus rapide que la mémoire résidente.
